# FASCICULE DE BREVET EUROPEEN

(11) **EP 0 896 923 B1**
(45) Date de publication et mention de la délivrance du brevet: **05.03.2003**
(21) Numéro de dépôt: 98402029.7
(22) Date de dépôt: 11.08.1998
(51) Int. Cl.: B64D 10/00

(54) **Dispositif de protection contre les accélérations**
Schutzvorrichtung gegen Beschleunigung
Device giving protection against acceleration

(30) Priorité: 13.08.1997 FR 9710343
(43) Date de publication de la demande: 17.02.1999
(73) Titulaire: Intertechnique, 78373 Plaisir Cedex (FR)
(72) Inventeur: Bardel, Michel, 78310 Maurepas (FR)
(74) Mandataire: Fort, Jacques

(56) Documents cités:
- EP-A- 0 136 223
- FR-A- 2 395 890
- FR-A- 2 663 232
- J. W. FRAZIER: "ANTI-G SUIT PRESSURE - HOW MUCH IS JUST RIGHT ?" IEEE 1988 NATIONAL AEROSPACE AND ELECTRONICS CONFERENCE NAECON 1988, vol. 3, 23 - 27 mai 1988, pages 897-902, XP002063160 DAYTON CONVENTION CENTER

## Description

La présente invention concerne les dispositifs de protection des membres de l'équipage d'un aéronef, et notamment des pilotes d'avions de combat, contre l'effet des accélérations élévées subies au cours d'une mission, notamment provoquées par des virages serrés.

Les dispositifs actuels de protection comportent un vêtement, ou au moins un pantalon, muni de poches et des moyens de commande qui alimentent les poches en gaz comprimé lorsque le facteur de charge positif (accélération dirigée vers le bas du corps) dépasse un seuil déterminé.

Il est souhaitable que le temps de réponse du dispositif soit faible, pour assurer une protection satisfaisante. Diverses dispositions ont été adoptées pour cela, notamment le pré-gonflage des poches en altitude (FR 2 395 890) et surtout l'utilisation d'une loi de commande qui établit, dans les poches du pantalon, un échelon de surpression de valeur déterminée dès qu'est dépassé un facteur de charge positif et prédéterminé et qui augmente ensuite la surpression de façon sensiblement linéaire à partir d'une origine virtuelle correspondant à un facteur de charge négatif (EP-A-0136223); cette loi est par exemple celle schématisée en tirets sur la figure 1.

Il a maintenant été constaté que la tolérance aux facteurs de charge positifs est temporairement réduite à la suite d'une exposition à un facteur de charge négatif. Cette réduction pourrait expliquer des accidents intervenus sur des avions de combat, d'entraînement et de voltige aérienne.

Le dégradation de la résistance aux facteurs de charge positifs Gz peut atteindre plusieurs fois la valeur gₙ normalisée de l'accélération de la pesanteur à la suite d'une exposition de quelques secondes à une accélération nulle ou à un facteur de charge négatif (pouvant atteindre -3 gₙ sur les avions de chasse actuels). Cette dégradation disparaît après quelques dizaines de secondes, nécessaires au rétablissement des fonctions cardio-vasculaires normales.

On pourrait penser que le problème peut être écarté en utilisant une loi de variation de la pression dans les poches qui tient compte des conditions les plus défavorables. Cette solution implique une consommation élevée de gaz de gonflage. Elle est source d'inconfort et de fatigue pour le porteur du pantalon, dont les poches seront gonflées beaucoup plus souvent et bien davantage qu'il n'est en général nécessaire.

L'invention vise à fournir un dispositif permettant d'assurer une protection satisfaisante au porteur d'un vêtement à poches gonflables sans augmenter l'inconfort et la consommation de gaz plus qu'il n'est nécessaire pour la sécurité.

Dans ce but, l'invention propose un dispositif dont les moyens de commande sont prévus pour modifier temporairement la loi de gonflage des poches (et éventuellement la surpression respiratoire) à la suite d'une exposition à un facteur de charge négatif. La modification peut être un décalage vers les bas facteurs de charge.

Ce décalage peut être effectué de plusieurs façons. On peut diminuer le seuil à partir duquel une surpression est créée et/ou augmenter un échelon initial de surpression; on peut également modifier la pente de la loi de variation à partir de la surpression initiale.

Les caractéristiques ci-dessus ainsi que d'autres apparaîtront mieux à la lecture de la description qui suit de modes particuliers de réalisation, donnés à titre d'exemples non-limitatifs. La description se réfère aux dessins qui l'accompagnent, dans lesquels :
la figure 1 montre la variation de la surpression ΔP dans les poches de pantalon obtenue dans un dispositif connu (en tirets) et dans le cas d'un dispositif suivant un mode d'exécution de l'invention, après un facteur de charge négatif (en trait plein);
la figure 2 est un schéma synoptique montrant les modifications apportées au traitement du signal de l'accéléromètre d'un dispositif électronique classique, afin de mettre en oeuvre l'invention;
la figure 3 est un organigramme simplifié montrant un traitement du signal de l'accélomètre avant régulation pour permettre d'utiliser un programme principal inchangé;
la figure 4 est un schéma de principe montrant une addition possible à un dispositif pneumatique existant, pour mettre en oeuvre l'invention;
la figure 5 montre un mode de liaison possible entre poches de pantalon et poches d'un gilet de vêtement anti-G, utilisable dans un dispositif selon l'invention.

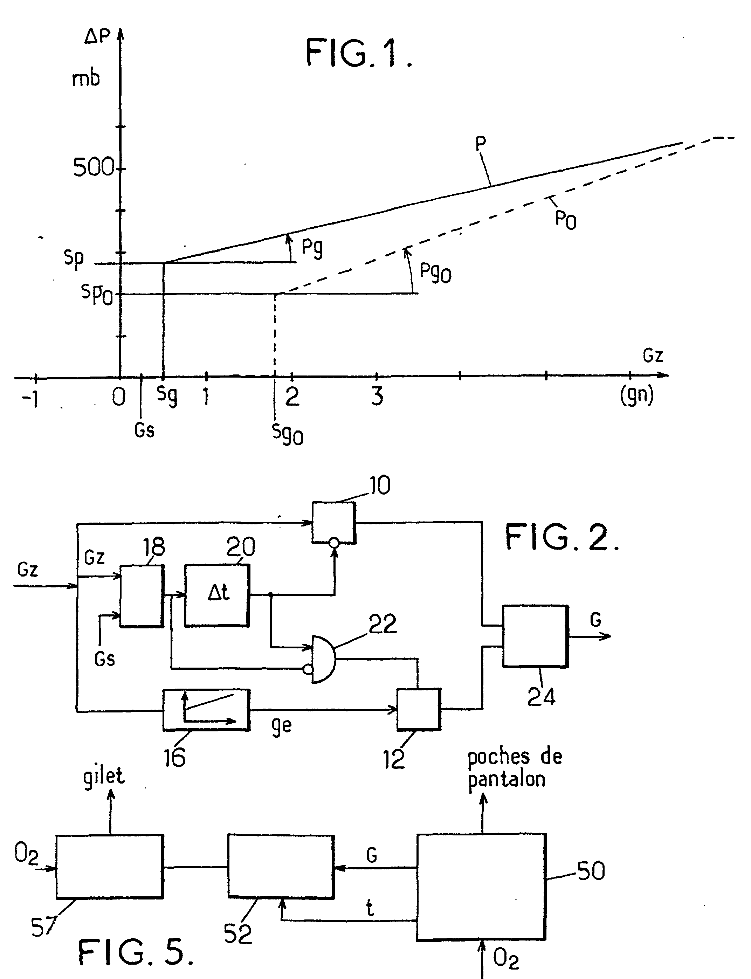

La figure 1 montre un exemple de mise en oeuvre de l'invention dans un cas où la loi normale de variation de la surpression ΔP (c'est-à-dire la loi appliquée lorsque le facteur de charge +Gz n'a pas été précédé d'un facteur de charge négatif) comporte un échelon Spₒ dès que Gz atteint une valeur déterminée Sgₒ, par exemple égale à 1,8gₙ, puis une partie linéaire de pente Pgₒ jusqu'à une valeur maximale de ΔP, qui est par exemple de 600 mbar à 9gₙ.

Lorsqu'une accélération négative a été détectée avant un facteur de charge positif, la loi de variation est modifiée de façon à se placer à gauche de la loi normale sur la figure 1.

Une première possibilité consiste à passer de la loi indiquée par la ligne Po à la ligne indiquée par P pendant une durée déterminée après qu'ait été détectée une accélération négative ou inférieure à un seuil. Ce seuil peut être égal à 0, légèrement négatif, ou être positif mais égal à une fraction seulement de l'accélération gₙ de la pesanteur. Dans le cas illustré sur la figure 1, ce seuil est par exemple Gs=0,2gₙ. La durée Δt de maintien de la loi représentée par P est par exemple comprise entre 20 et 30 secondes. Le dispositif peut être prévu de façon que Δt soit d'autant plus long que la durée ou l'importance de l'accélération négative est élevée. Une autre solution consiste à prévoir un dispositif provoquant une loi de variation représentée par une courbe comprise entre les lignes Pₒ et P et sélectionnée en fonction de l'intensité du facteur de charge négatif ou insuffisant.

Dans le cas montré en figure 1, la courbe P se différencie de Pₒ par :
- un décalage vers la gauche du seuil, qui passe par exemple de Sgₒ=1,8gₙ à Sg=0,5gₙ;
- une augmentation de l'échelon, qui passe par exemple de Spₒ = 200 mbar à Sp = 250 mbar ; et
- une réduction de la pente, telle que les courbes de variation conduisent sensiblement à la même surpression pour le facteur de charge maximum envisagé, par exemple 9gₙ.

Le dispositif peut être prévu de façon à permettre de modifier les valeurs Sg, Sp et Pg avant une mission, en fonction de l'environnement du pilote (pantalon, gilet éventuel, inclinaison du siège, performances de l'avion) et des paramètres physiologiques du pilote lui-même. La durée Δt peut elle aussi être rendu réglable en fonction des mêmes facteurs, dans une plage qui peut par exemple aller de 20 à 30 secondes.

L'invention peut être implémentée aussi bien dans un dispositif à commande pneumatique de la valve anti-g, tel que celui décrit dans le document EP-A-0136223, auquel on pourra se rapporter, qu'avec une commande électronique.

Les dispositifs à commande électronique comportent un accéléromètre fournissant un signal de sortie électrique représentatif de l'amplitude et du sens de l'accélération. Ce signal sera en permanence comparé à un seuil Gs, par exemple de 0,2gₙ.

Dès qu'une valeur inférieure à Gs est mesurée, le dispositif enclenche une temporisation de durée Δt et change Sgₒ en Sg (et éventuellement Spₒ en Sp et Pgₒ en Pg).

Les valeurs modifiées sont remplacées par les valeurs normales au bout d'un temps Δt sans nouveau facteur de charge inférieur au seuil Gs.

Si une accélération supérieure à Sg est décélée pendant Δt, les poches sont gonflées suivant la loi correspondant à la courbe P. Au bout de Δt il y a retour à la loi Pₒ, instantanément ou avec progressivité, par dégonflage partiel des poches.

L'invention peut être mise en oeuvre en adoptant des valeurs modifiées Sg, Sp, Pg et/ou une valeur Δt tenant compte de divers paramètres :
- facteur de charge Gz minimum, inférieur à Gs, atteint,
- durée pendant laquelle un facteur de charge inférieur à Gs est maintenu.

Une intégration peut être effectuée et pondérée de façon à donner plus d'importance aux valeurs de Gz les plus dangéreuses pour l'organisme.

Les modifications à apporter à des dispositifs existants pour mettre en oeuvre l'invention sont très réduites.

Un dispositif à commande électronique comporte un accéléromètre ayant un signal de sortie électrique représentatif de l'amplitude et du sens de l'accélération, le seuil Sg peut alors être modifié:
- en changeant les caractéristiques de l'étage de commande d'une électrovanne d'alimentation,
- plus simplement, en modifiant le signal en provenance de l'accéléromètre, de façon qu'il représente une accélération plus forte.

Lorsque le dispositif comporte une valve d'alimentation de poches à régulation analogique, la modification apportée au schéma de l'accéléromètre peut être celle montrée en figure 2. La temporisation Δt est reconduite à chaque passage du facteur de charge au-dessous du seuil Gs et le signal représentatif du facteur de charge mesuré par l'accéléromètre est modifié, par exemple en le multipliant par un gain supérieur à l'unité tant que le temps Δt ne s'est pas écoulé à partir du retour de Gz mesuré au dessus de Gs.

Bien que la figure 2 montre la modification sous forme d'un synoptique, le traitement peut être réalisé aussi bien par programmation ou par un circuit intégré d'application spécifique (ASIC) que par un circuit câblé.

Le signal Gz provenant de l'accéléromètre (non représenté) est appliqué à deux voies analogiques munies chacune d'une porte analogique 10 ou 12. Lorsque la porte 10 est débloquée, elle transmet le signal Gz sans modification. Dans le cas contraire, son signal de sortie est nul. Lorsque la porte 12 est débloquée, elle transmet un signal gₑ décalé et/ou amplifié par rapport à Gz. Le signal gₑ peut être élaboré par un circuit analogique ou un ensemble comportant un convertisseur analogique numérique d'entrée, une table de correspondance et un convertisseur numérique-analogique de sortie 16.

Une branche de commande des portes 10 et 12 permet de les débloquer alternativement. Elle comprend un comparateur 18 qui fournit un signal de sortie lorsque Gz < Gs. Ce signal déclenche une ligne à retard 20, pouvant être constituée par un monostable reconductible, dont la sortie est maintenue à 1 pendant une durée Δt après que Gz soit redevenu supérieur à Gs.

La sortie de la ligne à retard 20 bloque la porte 10 lorsqu'elle est à 1.

Cette même sortie de la ligne en retard 20 est appliquée à l'une des entrées d'une porte ET 22 dont l'autre entrée reçoit la sortie inversée du comparateur 18. Ainsi la porte ET 22 fournit un signal rendant la porte 12 passante, lorsque Gz > Gs et pendant une durée Δt ensuite, alors que la porte 10 est bloquée.

Un circuit de multiplexage 24 de sortie fournit soit un signal Gz, soit le signal ge dérivé de Gz, soit le signal nul.

La temporisation est reconduite à chaque passage du facteur de charge en dessous du seuil Gs.

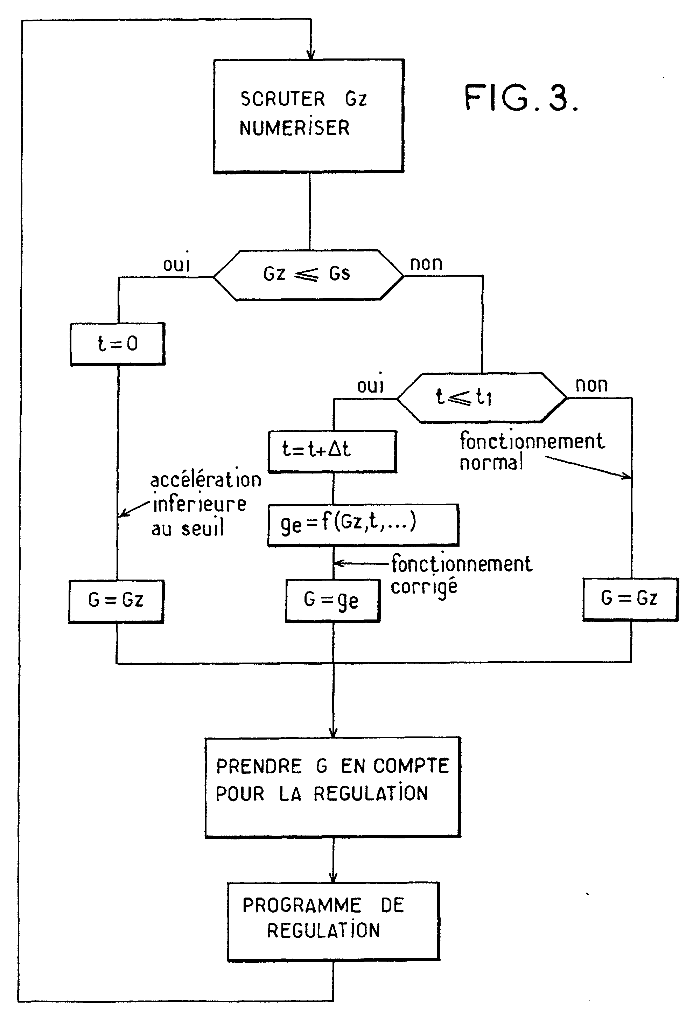

Dans le cas d'une régulation numérique, le programme d'un dispositif classique peut être conservé en le faisant précéder d'un traitement qui fournit en sortie la valeur G prise en compte et qui, comme dans le cas précédent, est suivant le cas soit l'accélération réelle Gz, soit une valeur modifiée Ge, soit 0, comme le montre la figure 3.

Gz est scruté à intervalles réguliers, pouvant être de l'ordre de 0,1 s.

Si Gz est inférieur au seuil Gs, une temporisation t est initialisée et le signal Gz transmis au programme de régulation.

Si Gz est supérieur au seuil, alors on scrute la temporisation. Si le temps t écoulé depuis la dernière accélération dangereuse est supérieur à t1, c'est la valeur Gz qui est transmise au programme de régulation.

Si le temps t1 n'est pas encore écoulé, la temporisation est incrémentée et l'accélération transmise est l'accélération corrigée.

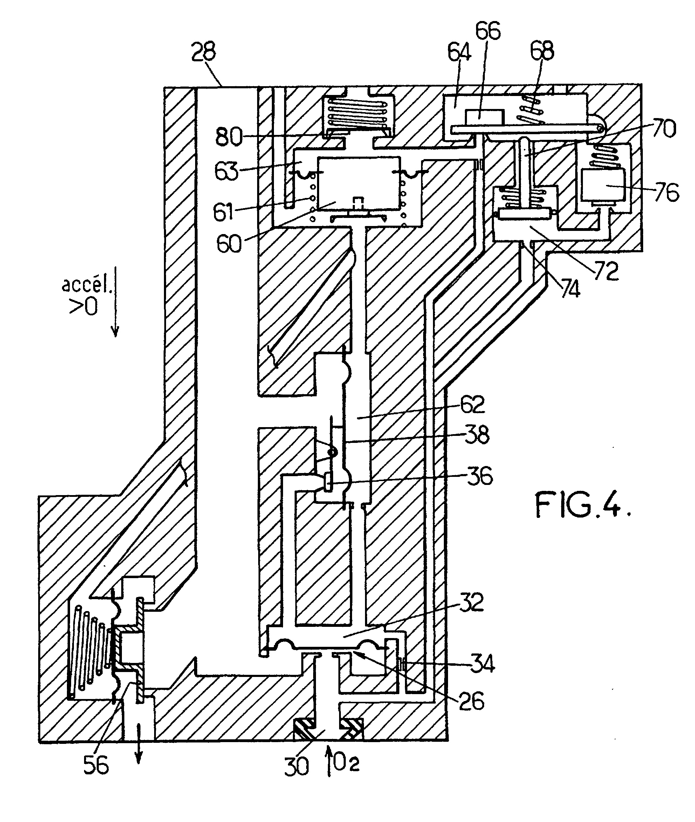

Pour mettre en oeuvre l'invention dans un dispositif pneumatique, il suffit d'ajouter quelques éléments à une valve anti-g d'architecture courante. La figure 4 montre une valve ayant un clapet principal 26 permettant d'alimenter les poches par une sortie 28, à partir d'une alimentation 30 en oxygène sous pression. Un clapet de vidange 56 permet de ramener la chambre à la pression ambiante. La chambre de pilotage 32 du clapet principal 26 est reliée à l'alimentation à l'oxygène sous pression par un étranglement 34. La pression qui y règne est commandée par un clapet pilote 36 commandé par une membrane 38. La membrane 38 est soumise à la pression dans un compartiment 62 qui est relié par un gicleur à la chambre 32 du clapet principal. Une masselotte 60 de détection d'accélération positive est sollicitée par un ressort 61 vers une position où elle relie le compartiment 62 à l'atmosphère. En cas d'accélération positive dépassant un seuil qui dépend de la pression qui règne à l'arrière de la masselotte, cette dernière ferme la communication de sorte que la pression monte dans le compartiment 62. Lorsque l'accélération disparaît, la masselotte est soulevée par le ressort et provoque l'ouverture du clapet de vidange 56.

La constitution décrite jusqu'ici est classique.

Le dispositif montré en figure 4 comporte de plus des moyens permettant de modifier la loi de variation de la surpression en fonction de l'accélération positive, lorsque cette dernière succède à une accélération négative.

Pour cela, l'arrière de la masselotte 60 est soumis à une pression accrue à la suite d'une accélération négative. Une chambre 63 située à l'arrière de la masselotte 60 est reliée d'une part à l'alimentation en oxygène par un étranglement, d'autre part à un compartiment 64 relié à l'air libre par un clapet commandé par une masselotte 66 de détection des accélérations négatives (vers le haut de la figure 4). Un ressort 68 exerce sur le levier portant la masselotte 66 un effort qui tend à fermer la communication avec l'atmosphre.

Le montage qui vient d'être décrit est complété par des moyens de temporisation qui comprennent un poussoir de temporisation 70 soumis à l'action de la pression dans une chambre de poussoir 72. Cette chambre est reliée à l'alimentation en oxygène par un gicleur de temporisation 74 et à l'atmosphère par un clapet commandé par une masselotte 76 de remise à zéro de temporisation.

Le fonctionnement d'un tel dispositif est le suivant:

### Etat de repos, en absence d'accélération :

La masselotte 76 est maintenue sur son siège par son ressort. Du gaz de régulation prélevé sur l'alimentation 30 est admis dans la chambre de poussoir 72 par le gicleur 74. La pression dans la chambre du poussoir maintient le poussoir 70 vers le haut, contre l'action de son ressort. Le poussoir 70 pousse le levier de la masselotte 66 vers le haut en comprimant le ressort 68. Le clapet sous la masselotte 66 est ouvert et purge la chambre 63 de la masselotte anti-g 60: cette masselotte n'est soumise qu'à son propre poids et se comporte comme une valve anti-g classique.

### Accélération négative :

La masselotte 76 de temporisation comprime son ressort et ouvre un passage étranglé qui vide la chambre de poussoir 72. Le poussoir 70 recule sous l'effet de son ressort. Cependant le levier reste levé suite à la force exercée par la masselotte 66, soumise à l'accélération négative et qui comprime le ressort 68.

### Transitoire après disparition de l'accélération négative :

La masselotte 66 revient sur son siège. Le débit d'oxygène qui arrive par le gicleur d'alimentation de la chambre 63 ne s'échappe plus par le clapet situé sous la masselotte 66. La pression monte au dessus de la masselotte anti-g 60 jusqu'à une valeur déterminée par un clapet 80 de limitation.

La masselotte 60 se comporte alors comme si son poids apparent était augmenté de PxS, P étant la pression dans la chambre 63 et S la section efficace de la membrane d'étanchéité de la masselotte 60. La valve anti-g se comporte comme si l'accélération était supérieure à sa valeur réelle.

Cette situation subsiste aussi longtemps que la masselotte 76 repose sur son siège et que le débit du gicleur 74 ne s'échappe pas par le clapet commandé par la masselotte 76. La pression monte progressivement dans la chambre 72. Le poussoir revient progressivement en position "sorti" et y arrive au bout d'un temps T1 déterminé par le dimensionnement du gicleur 74 et de la chambre.

### Situation une fois T1 écoulé dpuis la disparition de l'accélération négative :

Le poussoir 70 est en position "sorti", et pousse le levier de la masselotte 66 qui ouvre son clapet, ce qui purge la chambre 63 de la masselotte 60. La valve anti-g reprend un mode de fonctionnement nominale.

Lorsque l'avion possède un système provoquant une surpression respiratoire qui augmente avec le facteur de charge positif, du genre décrit dans les documents déjà cités, il n'est pas nécessaire de modifier la liaison entre le circuit de gonflage des poches du pantalon et le circuit de réglage de la surpression respiratoire.

En revanche, il peut être utile de modifier la loi qui relie la pression dans les poches du pantalon et la pression dans les poches de gilet pour tenir compte des facteurs de charge négatifs, cela afin de laisser au système cardio-vasculaire le temps de réagir et de ne pas le contrarier en appliquant une pression thoracique forte et précoce qui masquerait le déficit de pression arterielle.

La relation entre la pression dans les poches de pantalon et la pression dans les poches de gilet peut être choisie en fonction de l'environnement du pilote.

La figure 5 montre, à titre d'exemple, un montage possible. Le bloc 50 comporte tous les éléments de mise sous pression de poches de pantalon. Ce bloc fournit, à un convertisseur 52, la valeur G (figure 2). Le convertisseur élabore, à partir de G et du temps t, une loi de variation différente utilisée pour commander une valve 57 d'alimentation des poches de gilet. Le convertisseur peut notamment être constitué par une table de consultation commandant une électrovanne associée à un clapet de décharge.

## Revendications

1. Dispositif de protection contre les facteurs de charge positifs, comportant des moyens de commande destinés à alimenter une sortie (28) destinée à alimenter les poches d'un pantalon de protection en gaz comprimé lorsque le facteur de charge positif, dirigé vers le bas du corps, dépasse un seuil déterminé, sous une pression qui augmente avec le facteur de charge,
**caractérisé en ce que** les moyens de commande sont prévus pour modifier temporairement la loi de gonflage des poches à la suite d'une exposition à un facteur de charge négatif ou inférieur à un seuil prédéterminé, représentant une fraction de l'accélération normalisée de la pesanteur.

2. Dispositif selon la revendication 1, **caractérisé en ce que** les moyens de commande comportent une loi normale de variation de la surpression appliquée lorsque le facteur de charge n'a pas été précédé d'un facteur de charge négatif ou inférieur au seuil, comportant un échelon (Spₒ) dès que le facteur de charge positif (Gz) atteint une valeur déterminée (Sgₒ) puis une partie croissante ayant une pente déterminée (Pgₒ) et **en ce que** la loi de gonflage décalé comporte un échelon (Sp) supérieur à (Sp0) et/ou une valeur déterminée Sg inférieure à Sg0.

3. Dispositif selon la revendication 2, **caractérisé en ce que** la pente de la la loi décalée est inférieure à la pente de la loi normale (Pgₒ).

4. Dispositif selon l'une quelconque des revendications précédentes, **caractérisé en ce que** lesdits moyens de commande comprennent:
un équipage à masselotte (60) déplaçable, en réponse à un facteur de charge positif, contre l'action des moyens élastiques (61), vers une position où il provoque la mise en communication d'une arrivée de gaz comprimé (30) avec la sortie (28), et
une masselotte (66) déplaçable, sous l'action d'un facteur de charge négatif supérieur à un seuil, d'une position où elle ferme la communication avec l'atmosphère d'une chambre (63) alimentée en gaz comprimé par un étranglement à une position où elle relie ladite chambre à l'atmosphère, la pression dans ladite chambre exerçant sur ledit équipage à masselotte (60) une force tendant à amener ce dernier dans la position où il provoque la mise en communication de l'arrivée de gaz comprimé avec la sortie.

5. Dispositif la revendication 4, **caractérisé par** des moyens de temporisation sensible à un facteur de charge négatif, retardant le retour de la masselotte (66) à la position où elle ferme la communication de la chambre (63) avec l'atmosphère.

6. Dispositif selon la revendication 1, 2 ou 3, **caractérisé en ce que** les moyens de commande comprennent des moyens accélérométriques fournissant un signal qui est une fonction croissante de l'accélération et deux voies de traitement analogiques,
la première voie comportant une porte analogique (10) normalement débloquée,
la seconde voie analogique comportant des moyens de modification du signal représentatif de l'accélération et une porte analogique (12) qui est temporairement débloquée, en même temps que la porte (10) de la première voie est bloquée, après l'apparition d'un facteur de charge négatif supérieur à un seuil,
les sorties des deux voies étant reliées à un multiplexeur (24) de commande de la pression de gaz comprimé à la sortie du dispositif.

7. Dispositif selon la revendication 1, comprenant un sous-programme de traitement numérique du signal d'un accéléromètre avant de le mettre à disposition d'un programme principal de création de la loi normale.

## Patentansprüche

1. Vorrichtung zum Schutz vor positiven Lastvielfachen, welche Steuerungsmittel umfasst, die dazu bestimmt sind, einen Ausgang (28) zu versorgen, der vorgesehen ist, die Taschen einer Schutzhose, wenn das nach unten vom Körper gerichtete positive Lastvielfache einen festgelegten Grenzwert überschreitet, mit Druckgas mit einem Druck, der mit dem Lastvielfachen steigt, zu versorgen, **dadurch gekennzeichnet, dass** die Steuerungsmittel dazu vorgesehen sind, den Kurvenverlauf des Aufblasens der Taschen nach Einwirkung eines Lastvielfachen, das negativ oder kleiner als ein festgelegter Grenzwert ist, der einen Teil der normalisierten Beschleunigung der Schwerkraft darstellt, zeitweilig zu modifizieren.

2. Vorrichtung nach Anspruch 1, **dadurch gekennzeichnet, dass** die Steuerungsmittel einen normalen Kurvenverlauf der Veränderung des Überdrucks enthalten, der angelegt wird, wenn dem Lastvielfachen kein negatives oder kleiner als der Grenzwert gewesenes Lastvielfaches voranging, welcher eine Stufe (Sp₀), bei welcher das positive Lastvielfache (Gz) einen festgelegten Wert (Sg₀) erreicht, und anschließend einen ansteigenden Teil mit einer festgelegten Neigung (Pg₀) enthält, und dass der verschobene Kurvenverlauf des Aufblasens eine Stufe (Sp), die größer als (Sp₀) ist, und/oder einen festgelegten Wert Sg von kleiner als Sg₀ enthält.

3. Vorrichtung nach Anspruch 2, **dadurch gekennzeichnet, dass** die Neigung des verschobenen Kurvenverlaufs kleiner als die Neigung des normalen Kurvenverlaufs (Pg₀) ist.

4. Vorrichtung nach einem der vorhergehenden Ansprüche, **dadurch gekennzeichnet, dass** die Steuerungsmittel
- einen Fliehkraftregler (60), der als Reaktion auf ein positives Lastvielfaches gegen die Wirkung elastischer Mittel (61) in eine Position beweglich ist, in welcher er das In-Verbindung-Bringen eines Druckgaseinlasses (30) mit dem Ausgang (28) bewirkt, und
- einen Fliehkraftregler (66), der durch Einwirkung eines negativen Lastvielfachen, das größer als ein Grenzwert ist, von einer Position, in welcher er die Verbindung mit der Atmosphäre einer Kammer (63) schließt, die durch eine Drosselung mit Druckgas versorgt wird, in eine Position, in welcher er diese Kammer mit der Atmosphäre verbindet, beweglich ist, wobei der Druck in dieser Kammer auf den Fliehkraftregler (60) eine Kraft ausübt, die dazu führt, dass dieser in die Position gebracht wird, in welcher er das In-Verbindung-Bringen des Druckgaseinlasses mit dem Ausgang bewirkt,
umfassen.

5. Vorrichtung nach Anspruch 4, **dadurch gekennzeichnet, dass** Verzögerungsmittel, die gegenüber einem negativen Lastvielfachen empfindlich sind, die Rückkehr des Fliehkraftreglers (66) in die Position verzögern, in welcher er die Verbindung der Kammer (63) mit der Atmosphäre schließt.

6. Vorrichtung nach Anspruch 1, 2 oder 3, **dadurch gekennzeichnet, dass** die Steuerungsmittel Beschleunigungsmeßgeräte, die ein Signal liefern, das eine mit der Beschleunigung zunehmende Funktion ist, und zwei analoge Verarbeitungskanäle umfassen, wobei der
- erste Kanal ein normalerweise freies analoges Gatter (10) und der
- zweite analoge Kanal Mittel zur Modifizierung des für die Beschleunigung repräsentativen Signals und ein analoges Gatter (12), das, wenn das Gatter (10) des ersten Kanals geschlossen ist, nach Auftreten eines negativen Lastvielfachen, das größer als ein Grenzwert ist, zeitweilig frei ist, umfasst, und die
- Ausgänge der zwei Kanäle mit einem Multiplexer (24) für die Steuerung des Drucks des Druckgases am Ausgang der Vorrichtung verbunden sind.

7. Vorrichtung nach Anspruch 1, die ein Unterprogramm für die numerische Verarbeitung des Signals eines Beschleunigungsmeßgerätes enthält, bevor es einem Hauptprogramm zur Erzeugung des normalen Kurvenverlaufs zur Verfügung gestellt wird.

## Claims

1. Device for protecting a wearer against positive accelerations , comprising control means for feeding an outlet (28) delivering to pockets of a protective pair of trousers pressurized gas when a positive load factor or acceleration in the direction of the lower body exceeds a specific threshold, **characterized in that** the control means are designed temporarily to modify the inflation law for the pockets following exposure to a load factor or acceleration which is negative or lower than a predetermined threshold representing a fraction of the standard gravity acceleration.

2. Device according to claim 1, **characterized in that** the control means have a normal law for varying the applied over pressure when the load factor has not been preceded by a load factor which is negative or lower than a threshold, comprising a level (Sp₀) as soon as the positive load factor (Gz) reaches a predetermined value (Sg₀), then an increasing portion with a determined slope (Pg₀) and **in that** the shifted inflation law comprises a level (Sp) higher than (Sp₀) and/ or a determined value (Sg) lower than (Sg₀).

3. Device according to claim 2 , **characterized in that** the slope of the shifted law is lower than the slope of the normal law (Pg₀).

4. Device according to any one of the preceding claims, **characterized in that** said control means comprise:
- an inertia body unit (60) which is movable responsive to a positive load factor, against the force of resilient means (61), toward a position where it communicates a pressurized gas inlet (30) with the outlet (28), and
- an inertia body (66) movable, responsive to a negative load factor having a magnitude higher than a threshold, from a position where it closes a communication with atmosphere of a chamber (63) fed with pressurized gas via a restriction to a position where it connects said chamber to atmosphere, the pressure in said chamber exerting a force on said inertia body unit (60) for moving the latter into the position where it communicates the pressurized gas inlet and the outlet.

5. Device according to claim 4, **characterized by** timer means responsive to a negative load factor for delaying return of the inertial body (66) to the position where it closes communication between said chamber (63) and atmosphere.

6. Device according to claim 1, 2 or 3, **characterized in that** the control means comprise acceleration responsive means delivering a signal which is an increasing function of the amount of acceleration and two analog processing channels,
the first channel having an analog gate (10) which is normally open,
the second analog channel having means for modifying the acceleration responsive signal and an analog gate (12) temporarily opened, after appearance of a negative load factor having a magnitude higher than a threshold, while the gate (10) of the first channel is closed,
the outputs of the two channels being connected to a multiplexer (24) controlling the pressurized gas pressure at the outlet of the device.

7. Device according to claim 1, comprising a stored routine for digitally processing the signal from an accelerometer before delivering the signal to a main program which generates the normal law.
